# EUROPÄISCHE PATENTSCHRIFT

(11) **EP 1 289 168 B1**
(45) Veröffentlichungstag und Bekanntmachung des Hinweises auf die Patenterteilung: **08.06.2005**
(21) Anmeldenummer: 02018880.1
(22) Anmeldetag: 24.08.2002
(51) Int. Cl.: H04B 7/06, H04Q 7/38, H04B 7/08

(54) **Verfahren zur Funkübertragung von digitalen Nachrichtensignalen**
Method for radio transmission of digital data systems
Procédé de transmission de données au moyen de signaux radio

(30) Priorität: 31.08.2001 DE 10142404
(43) Veröffentlichungstag der Anmeldung: 05.03.2003
(73) Patentinhaber: Deutsches Zentrum für Luft- und Raumfahrt e.V., 51147 Köln (DE)
(72) Erfinder: Kaiser, Stefan, Dr., 82205 Gilching (DE); Dammann, Armin, 82266 Inning (DE); Raulefs, Ronald, 80538 München (DE)
(74) Vertreter: von Kirschbaum, Albrecht, Dipl.-Ing.

(56) Entgegenhaltungen:
- EP-A- 0 419 429
- WO-A-01/45300
- WO-A-98/09381
- US-A- 5 642 353
- SCHNELL M ET AL: "Diversity considerations for MC-CDMA systems in mobile communications" SPREAD SPECTRUM TECHNIQUES AND APPLICATIONS PROCEEDINGS, 1996., IEEE 4TH INTERNATIONAL SYMPOSIUM ON MAINZ, GERMANY 22-25 SEPT. 1996, NEW YORK, NY, USA,IEEE, US, 22. September 1996 (1996-09-22), Seiten 131-135, XP010208637 ISBN: 0-7803-3567-8
- KUBINA J ET AL: "Phase-swept and time-delay transmit diversity performance results for 1xRTT CDMA systems" WIRELESS COMMUNICATIONS AND NETWORKING CONFERENCE, Bd. 1, 2000, Seiten 347-350, XP010532522
- WANG W-J ET AL: "SOFT HANDOFF ANALYSIS OF CDMA SYSTEMS USING NOVEL SWITCHED-BEAM SMART ANTENNAS WITH POLARIZATION DIVERSITY" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, Bd. 1 OF 4. CONF. 53, 6. Mai 2001 (2001-05-06), Seiten 243-247, XP001066958 ISBN: 0-7803-6728-6
- SUNG JIN HONG ET AL: "Performance of soft handoff algorithms in various propagation environments" IEEE SIXTH INTERNATIONAL SYMPOSIUM ON SPREAD SPECTRUM TECHNIQUES AND APPLICATIONS, Bd. 1, 2000, Seiten 221-225, XP010517555

## Beschreibung

Die Erfindung betrifft ein Verfahren zur Funkübertragung eines digitalen Nachrichtensignals von einem Sender zu einem Empfänger unter Verwendung von Codierungsmaßnahmen, wobei mehrere Sendeantennenkeulen einer oder mehrerer intelligenter Antennengruppen des Senders unter Steuerung mittels eines adaptiven Antennenprozessors bei Ausnutzung der topographischen Kanalgegebenheiten gezielt auf den Empfänger gerichtet werden.

Die Mehrwegeausbreitung eines Signals im Übertragungskanal von Funksystemen verursacht konstruktive und destruktive Überlagerungen des Signals an der Empfangsantenne. Kritisch ist vor allem der daraus resultierende Signalschwund, der dazu führen kann, dass die Qualität der Funkverbindung sehr schlecht wird und die Verbindung nicht mehr aufrecht erhalten werden kann.

Bekannte Verfahren, die eingesetzt werden, um dem Signalschwund entgegenzuwirken, sind:
- eine Kanalcodierung, mit der auf Kosten von Redundanz im Datenstrom Übertragungsfehler in begrenztem Maße korrigiert werden können.
- eine Leistungsregelung, die bei starken Signaldämpfungen die Sendeleistung anhebt, um die Verbindung aufrecht zu erhalten;
- Diversity-Techniken, bei denen mehrere Sende- und/oder Empfangsantennen eingesetzt werden, wodurch mehrere unabhängig voneinander gestörte Signale am/im Empfänger überlagert werden und die Datendetektion zuverlässiger wird (siehe beispielsweise S. Kaiser: "Spatial transmit diversity techniques for broadband OFDM systems," in Proc. IEEE Global Telecommun. Conf. (GLOBECOM 2000), San Francisco, USA, S. 1824-1828, Nov./Dez. 2000.);
- Space-Time-Coding (siehe beispielsweise V. Tarokh und N. Seshadri und A. R. Calderbank: "Space-Time Codes for High Data Rate Wireless Communication: Performance Criterion and Code Construction", IEEE Transactions on Information Theory, Vol. 44, No. 2, S. 744-764, März 1998), das zusätzlich Redundanz in "Raumrichtung" einfügt. Dabei werden über mehrere Sendeantennen gleichzeitig verschiedene codierte Signale abgestrahlt, die über eine oder mehrere Empfangsantennen empfangen werden;
- Intelligente Antennen (L.C. Godara: "Applications of Antenna Arrays to Mobile Communications, Part I: Performance Improvement, Feasibility, and System Considerations," Proceedings of the IEEE, Vol. 85, No. 7, S. 1031-1060; L.C. Godara: "Applications of Antenna Arrays to Mobile Communications, Part II: Beam-Forming and Direction-of-Arrival Considerations," Proceedings of the IEEE, Vol. 85, No. 8, S. 1195-1245) kombinieren auf "intelligente" Art mittels eines adaptiven Antennenprozessors mehrere Signale in Empfangs- oder Senderichtung mit verschiedenen Antennenelementen. Die Sendesignale werden mittels Antennenkeulen in Richtung der besten Signalwege für den Empfänger ausgesendet. Die zur Verfügung stehende Sendeleistung wird optimal gebündelt, und Interferenz im zellularen Funksystem minimiert. Die Empfangssignale werden durch das Ausrichten der Keulen einer intelligenten Antenne am Empfänger optimal empfangen und Störsignale unterdrückt.

Ein Verfahren zur Steigerung der Funkübertragungskapazität zwischen einer Basisstation und einem Teilnehmer in einer Funkzelle ist aus WO 98/09381 A1 bekannt. Hierbei werden unter Einsatz intelligenter adaptiver Antennengruppen bei der Basisstation und beim Teilnehmer mehrere Reflexionen ausnützende Strahlungskeulen erzeugt, über die parallel mehrere Nachrichtensignale zugleich übertragen werden können.

Auch aus US-A-5 642 353 und WO 01/45300 A1 sind ähnliche Verfahren zum Erhöhen der Funkübertragungskapazität zwischen einer Basisstation und Teilnehmern unter Verwendung intelligenter adaptiver Antennen bekannt, die ein gleichzeitiges Übertragen von Nachrichtensignalen über mehrere Antennenkeulen ermöglichen.

Aus EP-0 419 429 A1 ist ein Multiplex-Funkübertragungssystem bekannt, bei dem im Sender von zwei rundstrahlenden Antennen bei gleichen Signalfrequenzen wechselweise der gleiche Informationsinhalt, jedoch mit zeitlichem Phasensprung zueinander, ausgesendet wird. Dadurch entsteht eine Antennendiversität, welche eventuell vorhandene Schwund-Nullstellen geographisch verschieben kann.

Im Aufsatz von Wang W-J et al: "Soft Handoff Analysis of CDMA Systems Using Novel Switched-Beam Smart Antennas with Polarization Diversity", VTC 2001 Spring. IEEE VTS 53RD. Vehicular Technology Conference, Rhodes, Greece, May 6-9, 2001, IEEE Vehicular Technology Conference, New York, NY: IEEE, US, Bd. 1 of 4. Conf. 53, 6. Mai 2001 (2001-05-06), Seiten 342-247, XP001066958 ISBN: 0-7803-6728-6 ist die Ausführung von Soft-Handover mit neuartigen intelligenten Keulenumschaltungsantennen mit Butler-Matrix beschrieben, wobei auch Algorithmen angeführt sind, die sich mit Soft-Handover bei solchen intelligenten Antennengruppen in einer Basisstation auseinandersetzen.

Die Nachteile der bekannten Verfahren, die eingesetzt werden, um dem Signalschwund entgegenzuwirken sind nachstehend aufgeführt:
Die Kanalcodierung verringert die spektrale Effizienz des Systems, da Redundanz in den Datenstrom eingefügt werden muss. Bei heutigen digitalen Rundfunksystemen, wie DAB und DVB, aber auch bei Mobilfunksystemen, wie GSM und UMTS, liegen diese Verluste in der Größenordung von 50 %.

Die Leistungsregelung erhöht die Interferenz in einem Funksystem, da dadurch andere Teilnehmer stärker gestört werden können. Ferner widerstrebt dieser Ansatz dem Ziel, den Durchsatz an Daten zu optimieren, da verstärkt Sendeleistung in ungünstigen Übertragungskanälen verschwendet wird, die dann nicht mehr für die guten Übertragungskanäle zur Verfügung steht.

Bei den bekannten Diversity-Techniken wird die zur Verfügung stehende Sendeleistung nicht in geeigneter Weise verwendet, da die Signalleistung nicht gezielt über mehrere Ausbreitungswege an den Empfänger gerichtet wird, sondern isotrope oder bestenfalls sektorisierte Antennen verwendet werden.

Bei einer Space-Time-Codierung werden mindestens zwei isotrope Sendeantennen bzw. eine oder mehrere Empfangsantennen verwendet. Die alleinige Anwendung von Space-Time-Codierung bietet somit keine Möglichkeit zur gezielten räumlichen Verteilung der Sendeleistung bzw. Sendesignalströme. Des weiteren kann am Empfänger durch die Verwendung von isotropen Antennen nur eine Überlagerung der senderseitig abgestrahlten Signale empfangen werden.

Da sich bei intelligenten Antennen das Signal einer Sendekeule im Kanal immer noch dispersiv ausbreitet, kommt es dennoch zu Signaldämpfungen, die mit einer der vorstehend beschriebenen Methoden behoben werden müssen, wobei auch deren Nachteile nicht vermieden werden können.

Aufgabe der Erfindung ist es, bei einem Funkübertragungssystem für digitale Nachrichtensignale die Sendeleistung durch Ausnutzung der topographischen Gegebenheiten des Kanals gezielt an den Empfänger zu richten, wobei die negativen Auswirkungen des Signalschwunds im Mehrwegeausbreitungskanal reduziert und die erforderliche Sendeleistung und damit auch die Interferenz im Funksystem minimiert werden.

Die Erfindung wird durch die Merkmale des Anspruchs 1 definiert.

Weitere vorteilhafte Maßnahmen und Weiterbildungen beim Verfahren nach der Erfindung sind in den Unteransprüchen angegeben, die sich unmittelbar oder mittelbar auf den Patentanspruch 1 beziehen.

Charakteristisch für die Erfindung ist es, dass mehrere Keulen von ein oder mehreren intelligenten Antennen eines Senders gezielt auf einen Empfänger gerichtet werden, wobei die einzelnen Keulen durch verschiedene Modifikationsmethoden veränderte Signale in verschiedene Richtungen ausstrahlen und diese durch das Ausnutzen der topographischen Gegebenheiten den Empfänger erreichen.

Das Verfahren nach der Erfindung ermöglicht es somit, die Sendeleistung durch Ausnutzung der topographischen Gegebenheiten des Übertragungskanals gezielt an den Empfänger zu richten. Dieses Verfahren verhilft zu einer geeigneten Modifikation des Sendesignals derart, dass das Spektrum des Empfangssignals so beeinflußt werden kann, dass der Empfänger in der Lage ist, dieses Signal korrekt zu detektieren. Dieses Verfahren verringert also die negativen Auswirkungen des Signalschwunds im Mehrwegeausbreitungskanal ganz wesentlich und es minimiert die erforderliche Sendeleistung und damit auch die Interferenz im jeweiligen Funksystem.

Die Übertragungskanäle zwischen den einzelnen Keulen und der Empfangsstation sind in der Regel unkorreliert. Die Sendesignale an den einzelnen Keulen können nach unterschiedlichen Kriterien modifiziert werden. Ausgangsszenario ist das Senden des gleichen Signals über mehrere Sendeantennenkeulen, wobei die Antennenkeulen so ausgerichtet werden, dass die Signale auf unterschiedlichen Wegen den Empfänger erreichen. Dieses Szenario ermöglicht es, die zur Verfügung stehende Sendeleistung gezielt auf den Empfänger zu richten, wobei durch den Einsatz mehrerer Sendeantennenkeulen mit unterschiedlichen Übertragungskanälen die Empfangsqualität entschieden verbessert werden kann.

Unterliegt der Übertragungskanal einer Keule einem starken Signalschwund, bei dem keine Verbindung mehr möglich ist, so ist die Wahrscheinlichkeit groß, das der Kanal einer oder mehrerer weiterer Keulen eine ausreichende Übertragungsqualität zur Verfügung stellt und die Verbindung aufrecht erhalten werden kann. Spezifisch für die Erfindung ist die Modifikation des Sendesignals an den einzelnen Sendeantennenkeulen.

Das Verfahren nach der Erfindung wird nachfolgend anhand von Zeichnungen beschrieben. Es zeigen:
- Fig.1a bis 1c: beispielhaft Szenarien für die Anwendung von intelligenten Antennen am Sender und/oder Empfänger,
- Fig.2: in einem Blockschaltbild die Verknüpfung zwischen Space-Time-Coding und intelligenten Antennen auf der Sende- und Empfangsseite,
- Fig.3: das Blockschaltbild eines Beispiels einer DVB-T-Senderimplementierung,
- Fig.4: das Blockschaltbild eines Beispiels einer DVB-T-Empfängerimplementierung mit gerichteten Antennenkeulen, und
- Fig.5: die ermittelten Bitfehlerraten über das Signal/Rauschleistungsverhältnis (E_{S}/N₀) bei dem anhand von Fig.3 und Fig.4 betrachteten DVB-T-Funksystembeispiel.

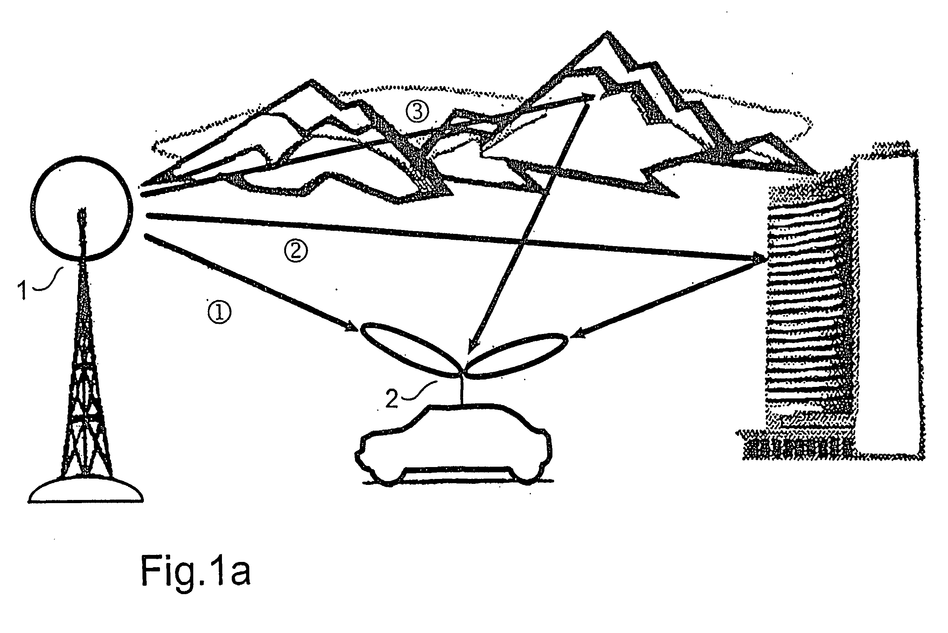

Die in Fig.1a dargestellte Kombination mit isotroper Antenne am Sender 1 und intelligenter, mehrkeuliger Antenne am Empfänger 2 ermöglicht es, Überlagerungen der einzelnen Ausbreitungspfade zu verhindern. Dadurch ist sowohl eine Kompensation der Laufzeitdifferenz (hier zwischen dem Funkübertragungspfad ① und ②) als auch die Ausblendung von Funkübertragungspfaden (hier Funkübertragungspfad ③) möglich.

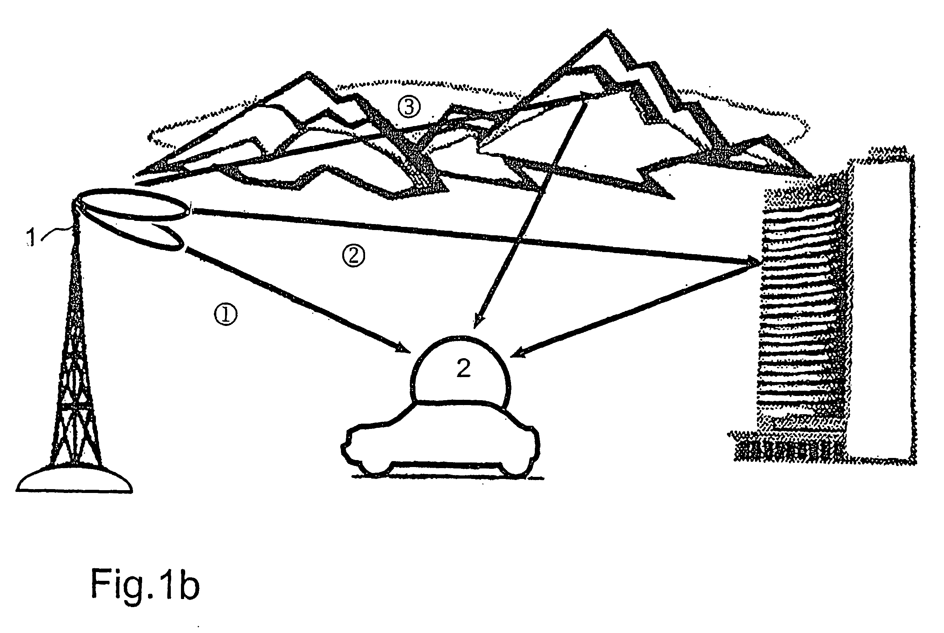

Die in Fig.1b dargestellte Kombination mit intelligenter, mehrkeuliger Antenne am Sender 1 und isotroper Antenne am Empfänger 2 bietet die Möglichkeit, die Sendeleistung gezielt und bei bekannten Kanalparametern informationstheoretisch optimal zu verteilen. Auch hierbei besteht - bei bekanntem Kanal - die Möglichkeit zur Kompensation der Laufzeitdifferenzen. Diese Laufzeitdifferenzen sind hauptsächlich für frequenzselektiven Schwund verantwortlich.

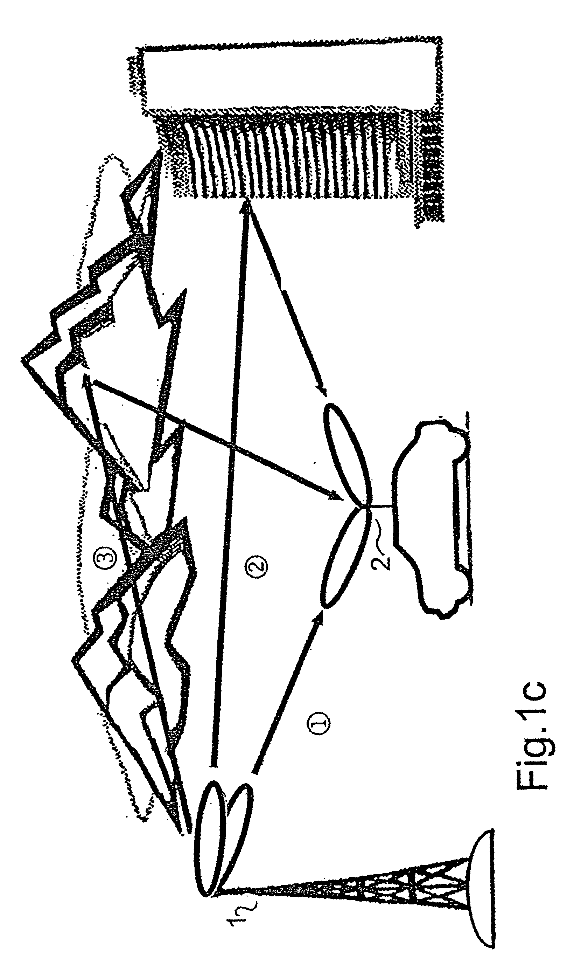

Die in Fig.1c dargestellte Kombination mit intelligenter, mehrkeuliger Antenne am Sender 1 und ebenfalls intelligenter, mehrkeuliger Antenne am Empfänger 2 vereinigt die Eigenschaften der Kombinationen von Fig.1a und 1b. Wie im Beispiel zu erkennen ist, existieren durch die räumliche Selektivität am Sender 1 und Empfänger 2 mehrere - im Idealfall unabhängige - Übertragungskanäle, auf welche die Sendeleistung und die gesendete Information nach informationstheoretischen Gesichtspunkten verteilt werden kann.

In Mehrwegeszenarien kann Space-Time-Codierung in Kombination mit intelligenten Antennen sehr flexibel eingesetzt werden, da durch die gezielte räumliche Ausrichtung der Antennencharakteristik am Sender eine räumliche Verteilung der Sendeleistung und der Signalströme ermöglicht wird. Die beim Verfahren nach der Erfindung vorgesehene Einstellung der Empfangsantennencharakteristik erlaubt darüber hinaus eine gezielte Auswahl von räumlich getrennten Ausbreitungspfaden, was, in Kombination mit einer intelligenten Sendeantenne, eine Signaltrennung ermöglicht.

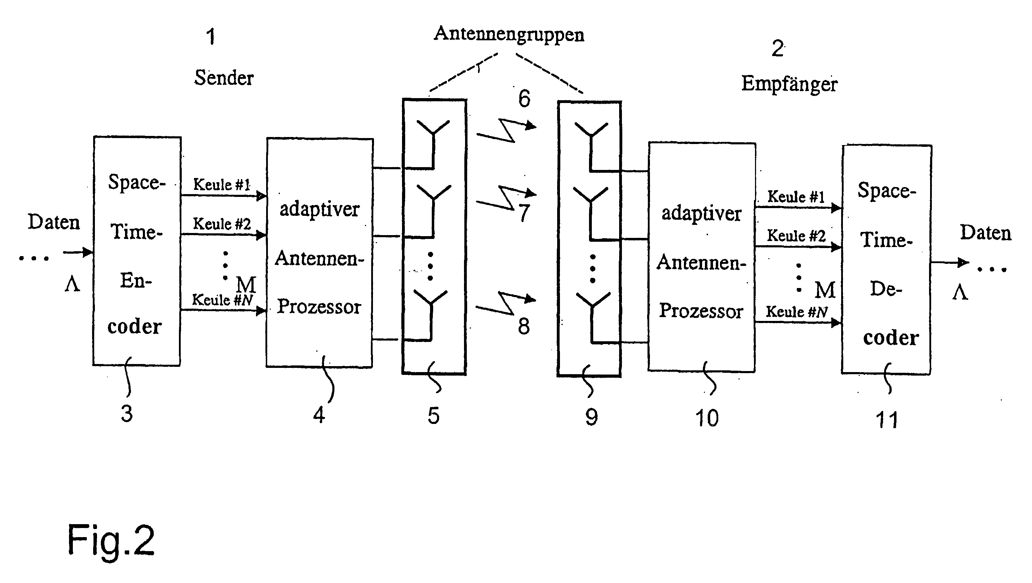

In Fig.2 ist schematisch eine Verknüpfung zwischen Space-Time-Coding und intelligenten Antennen am Sender 1 und Empfänger 2 gezeigt. Ein Space-Time-Encoder 3 liefert aus einem Datenstrom A eine Anzahl von N verschieden modifizierten Signalströmen M, die von einem adaptiven Antennenprozessor 4 verarbeitet werden. Der Antennenprozessor 4 steuert eine angeschlossene Antennengruppe 5 derart, dass die *N* modifizierten Signalströme M entsprechend dem Ausbreitungsszenario in verschiedene Raumrichtungen 6, 7, 8 abgestrahlt werden.

Am Empfänger 2 liefert ein an eine Antennengruppe 9 angeschlossener adaptiver Antennenprozessor 10 die *N* verschiedenen Signalströme M, indem er gezielt die Antennencharakteristik der Antennengruppe 9 entsprechend den Empfangsrichtungen einstellt. Anschließend werden die *N* Signalströme M in einem Space-Time-Decodierer 11 decodiert, so dass der Datenstrom A entnommen werden kann. Hierbei muß die Anzahl der empfangs- und sendeseitigen Keulen nicht zwingend gleich sein.

Gemäß der Erfindung ergeben sich somit folgende Vorteile gegenüber dem Stand der Technik. Durch das Ausrichten mehrerer Sendekeulen auf einen Empfänger über unterschiedliche Ausbreitungswege ergeben sich neue Methoden zur Diversity-Ausnutzung im Empfänger. Diese Methoden ermöglichen es, das Spektrum des empfangenen Signals gezielt zu formen, so dass es im Empfänger verlustfreier detektiert werden kann im Vergleich zu herkömmlichen Verfahren.

Die Verteilung der Kanalfehler läßt sich so beeinflussen, dass diese im Empfänger korrigiert werden können. Klassische Verfahren mit intelligenten Antennen sind nicht in der Lage, das Spektrum und damit die Fehlerverteilung im Empfänger derart zu beeinflussen, dass z.B. im kritischen Schwundkanal ohne Frequenzselektivität eine Verbindung ohne eine der weiteren, vorher beschriebenen Maßnahmen aufrecht erhalten werden kann.

Das erfindungsgemäße Verfahren kommt bei der Kanalcodierung, bedingt durch eine günstigere Kanalfehlerverteilung, mit geringerer Redundanz als die herkömmlichen Funksysteme aus. Werden beim erfindungsgemäßen Verfahren empfangsseitig auch intelligente Antennen eingesetzt, dann kann das Signal/Störleistungsverhältnis durch Maximum-Ratio-Combining optimiert werden. Beim Verfahren nach der Erfindung wird keine Leistungsregelung benötigt, um dem Signalschwund entgegenzuwirken; dadurch werden die Nachteile einer Leistungsregelung vermieden. Durch das adaptive Zu- und Abschalten von Datenkanälen kann somit die Datenrate gezielt an die Anforderungen der Anwendung angepaßt werden.

Dem erfindungsgemäßen Verfahren inhärent ist eine Leistungsoptimierung, bei der nur Leistung in Richtung des Empfängers abgestrahlt wird, wodurch die Interferenz im Gesamtsystem verringert wird. Weitere Ausführungsmöglichkeiten und Vorteile des Verfahrens nach der Erfindung, wie z.B. die bei einem Soft-Handover, sind nachfolgend aufgeführt.

Beim Verfahren nach der Erfindung können die Signale an den einzelnen Keulen zeitlich zueinander verzögert oder in der Phase zueinander verschoben ausgesendet werden. Dies kann als eine zeitliche Spreizung des Sendesignals angesehen werden. Da die zeitliche Spreizung des zu übertragenden Signals eine Frequenzselektivität im Spektrum des empfangenen Signals hervorruft, kann mit diesem Verfahren künstlich die Frequenzselektivität des Spektrums des empfangenen Signals beeinflußt werden.

Ziel ist es z.B. im Falle eines Schwundkanals ohne Frequenzselektivität, diese künstlich zu erzeugen, um Fälle zu vermeiden, in denen sich das gesamte Signalspektrum in einem tiefen Schwund befindet und es zu erheblichen Störungen und Empfangsbeeinträchtigungen im Empfänger kommt, bis hin zum Gesamt-Systemausfall.

Durch diese neue, durch die Erfindung angegebene Kombination wird es ermöglicht, dass auch im ungünstigen Fall, bei dem alle Kanäle der Sendekeulen einem Signalschwund ohne oder nur mit geringer Frequenzselektivität unterliegen, dennoch eine Verbindung aufrecht erhalten werden kann. Dies wird in vorteilhafter Weise mit dem erfindungsgemäßen Verfahren durch die künstliche Frequenzselektivität und eine Kombination mit z.B. einer Kanalcodierung erreicht.

Bei der Variante, bei der die Phasen der Signale an den einzelnen Sendekeulen zueinander verschoben sind, läßt sich in vorteilhafter Weiterbildung des Verfahrens nach der Erfindung eine zeitlich veränderliche Phasenverschiebung realisieren, die eine künstliche zeitliche Varianz in das Empfangssignal bringt.

Ist die zeitliche Varianz des Übertragungskanals langsam, beispielsweise in kleinen Zellen wie bei Funksystemen für den Indoor-Bereich, so kann das Empfangssignal längere Zeit einem starken Signalschwund unterliegen und die Verbindung abbrechen. Wird aber nun eine künstliche Zeitvarianz herbeigeführt, so ist der zeitliche Signalschwund relativ kurz und die auftretenden Übertragungsfehler können in geeigneter Weise, z.B. von einer Kanalcodierung, korrigiert werden.

Die Effizienz der beiden bisher beschriebenen Maßnahmen kann durch das Verwürfeln der Daten im Sender mit einem Interleaver verbessert werden. Bei einer OFDM-Übertragung kann dies ein Zeit- und/oder Frequenzinterleaving sein. Der Empfänger stellt hierbei die entsprechenden Deinterleaver zur Verfügung.

Ferner kann gemäß einer weiteren vorteilhaften Weiterbildung der Erfindung bei Systemen mit Mehrträgermodulation, wie z.B. OFDM, die Gesamtzahl der Unterträger in *N* Gruppen aufgeteilt werden, wobei *N* in geeigneter Weise der Anzahl der Sendekeulen entsprechen sollte. Jede Gruppe der Unterträger sollte über eine andere Sendekeule ausgestrahlt werden. Bei der Zuordnung der Unterträger zu den einzelnen Gruppen sollten die Unterträger so gewählt werden, dass die Unterträger der einzelnen Gruppen verwürfelt (interleaved) sind, um die Frequenzdiversity des Übertragungskanals geeignet zu nutzen.

Erfahren die Unterträger des Kanals einer Keule einen starken Signalschwund, so ist die Wahrscheinlichkeit hoch, dass die Unterträger, die über eine andere Keule ausgestrahlt werden, mit ausreichender Übertragungsqualität empfangen werden können, da die Kanäle in der Regel zueinander unkorreliert sind. Wird diese neue Kombination z.B. mit einer Kanalcodierung verbunden, so kann diese in geeigneter Weise die Fehler auf den Unterträgern mit dem schlechten Kanal mit Hilfe der Unterträger mit guten Kanaleigenschaften korrigieren.

Auch können gemäß einer Weiterbildung der Erfindung durch schnelles Wechseln der Sendekeulen nur Daten auf denjenigen Keulen gesendet werden, auf denen der Übertragungskanal keinem signifikanten Schwund unterliegt. Keulen, die bedingt durch den schnellen Kanalschwund einer starken Dämpfung unterliegen, senden während des starken Schwundes nicht. Dadurch wird die Sendeleistung reduziert.

Gemäß einer anderen Weiterbildung der Erfindung werden in geeigneter Weise die einzelnen Sendekeulen mit Space-Time-Codierung kombiniert, wobei Redundanz nicht nur in Zeit- und/oder Frequenzrichtung in den Datenstrom eingefügt wird, sondern auch in "Raumrichtung". Dabei werden von den (isotropen) Sendeantennen verschiedene Signale abgestrahlt, die sich am Empfänger überlagern.

Die Flexibilität von Space-Time-Coding läßt sich durch Sende- und Empfangsantennen mit mehreren Keulen, die paarweise aufeinander adaptiert sind, weiter steigern. Hiermit können getrennte Ausbreitungskanäle realisiert werden, welche die vorher erwähnte Signalüberlagerung am Empfänger verhindern und sowohl eine gezielte Verteilung der Information am Sender als auch eine Verarbeitung der empfangenen Signale (und nicht nur deren Überlagerung) an den einzelnen Keulen zulassen. Bei der Verwendung von Space-Time-Coding muß empfangsseitig ein geeigneter Decoder zur Verfügung stehen.

Es ist möglich, empfangsseitig eine oder mehrere Keulen auf die Empfangsrichtung(en) mit der stärksten Leistung einzustellen. Des weiteren können empfangsseitig unterschiedliche Konzepte zur Verbesserung der Leistungsfähigkeit des Systems implementiert werden.

Empfängerseitig ist die Kompensation von Laufzeitunterschieden und Phasendrehungen zwischen den Signalen an den Keulen des Empfängers sehr leicht möglich. Sind die Kanalparameter Dämpfung, Phasendrehung und Laufzeit für die einzelnen verwendeten Ausbreitungspfade (Keulen) am Sender bekannt, so ist diese Kompensation bei Punkt-zu-Punkt-Verbindungen auch senderseitig möglich. Weiterhin ließe sich senderseitig auch eine Kompensation der Ausbreitungsdämpfung realisieren. Somit ist in gewissen Grenzen eine "Formung" der Parameter des Kommunikationskanals möglich.

Ist der Schwund der einzelnen Ausbreitungspfade (Keulen) nicht frequenzselektiv, so ließe sich bei senderseitiger Kompensation von Laufzeit, Phasendrehung und Dämpfung im Idealfall ein AWGN(Additive White Gaussian Noise)-Kanal formen. Werden mehrere Empfangskeulen verwendet und werden die gleichen Signale an den einzelnen Keulen der Sendeantennen ausgestrahlt, so können die Signale der einzelnen Keulen empfangsseitig durch z.B. Maximum-Ratio-Combining (MRC) miteinander verknüpft werden. Dies führt zu einer Maximierung des Signal/Störleistungsverhältnisses im Empfänger.

Durch eine Weiterbildung der Erfindung kann auch die Datenrate des Systems erhöht werden, indem Gruppen von Sende- und Empfangskeulen einander zugeordnet werden und jeweils eine sendeseitige und eine empfangsseitige Gruppe ein Paar bilden, das einen Datenkanal zur Verfügung stellt. Dies bedeutet, dass mehrere Datenkanäle gleichzeitig im gleichen Frequenzband zwischen zwei Funkgeräten aufgebaut werden können. Diese Weiterbildung ermöglicht es, die Datenrate des Systems gezielt den Erfordernissen der Anwendung anzupassen. So können flexibel Datenkanäle zu- oder abgeschaltet werden. Diese Flexibilität ist mit heutigen Übertragungsverfahren nicht gegeben.

Die einzelnen Merkmale und Weiterbildungen der Erfindung können miteinander kombiniert werden und ermöglichen so eine weitere Verbesserung der Übertragungseigenschaften des Systems. Die Erfindung verbessert die Möglichkeiten, die Sendeleistung gezielter auf den Empfänger auszurichten und dadurch die erforderliche Sendeleistung zu minimieren.

Anstelle einer klassischen Kanalcodierung zur Korrektur von Restfehlern können beim Verfahren nach der Erfindung auch Verfahren wie Multi-Carrier-Code-Division-Multiplexing (MC-CDM) eingesetzt werden, die keine Ratenverluste aufweisen und durch geeignete Ausnutzung von Zeit- und/oder Frequenzdiversity die Übertragungsqualität verbessern. Das MC-CDM-Verfahren ist in S. Kaiser: "Performance of multi-carrier CDM and COFDM in fading channels" in Proc. IEEE Global Telecommunications Conference (GLOBECOM'99), Rio de Janeiro, Brasilien, Seiten 847 bis 851, Dezember 1999 beschrieben.

Ferner bieten sich bei zellularen Funksystemen durch Anwendung des Verfahrens nach der Erfindung auch ganz neue Möglichkeiten der Zellplanung. So kann ein Empfänger eines mobilen Funkgerätes seine Daten nicht nur von einer Basisstation erhalten, sondern mehrere Keulen unterschiedlicher Basisstationen können dem Empfänger des Funkgerätes Daten, die nach einem oder mehreren Merkmalen der Erfindung modifiziert sind, senden.

Stehen dem mobilen Funkgerät wiederum mehrere Keulen zum Senden zur Verfügung, so kann dieses in umgekehrter Richtung seine Daten nicht nur an eine, sondern an mehrere Basisstationen nach einem oder mehreren Merkmalen der Erfindung modifiziert senden. Diese beiden Möglichkeiten vereinfachen auch das Verfahren eines Soft-Handovers, bei dem das mobile Funkgerät die kooperierende Basisstation wechselt, wobei bereits eine Verbindung, über eine oder mehrere Keulen zur neuen Basisstation besteht, bevor die Verbindung über eine oder mehrere andere Keulen zur alten Basisstation abgebaut wird.

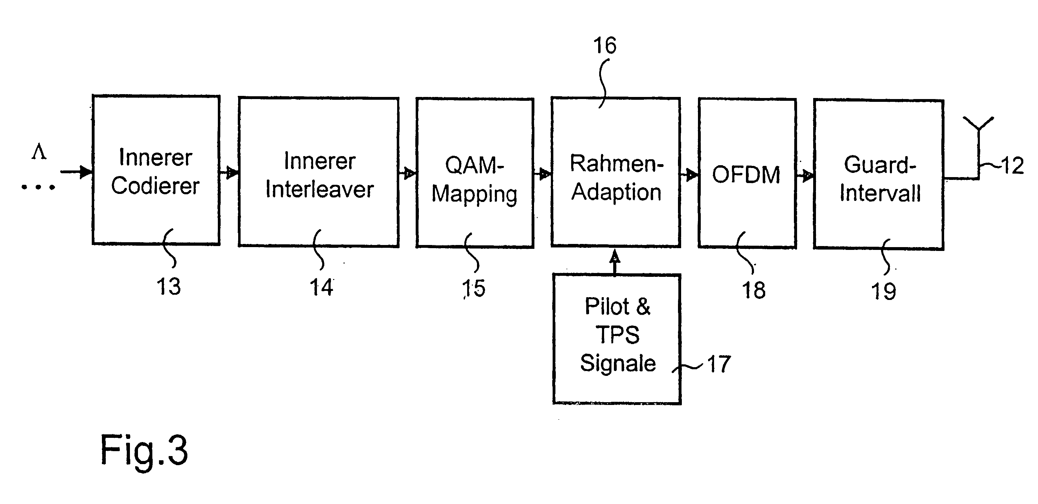

Zur Abschätzung der durch Anwendung des Verfahrens nach der Erfindung erreichbaren Gewinne wird nachfolgend als Beispiel die empfängerseitige Implementierung von "intelligenten Antennen" für den DVB-T-Standard betrachtet. Aus Kompatibilitätsgründen wird keine Space-Time-Codierung implementiert. In Fig.3 ist ein Blockschaltbild für einen Standard-DVB-T-Sender ab der inneren Codierung dargestellt. Wie Fig.3 zu entnehmen ist, wird in diesem Beispiel senderseitig eine Sendeantenne 12 mit isotroper Antennencharakteristik verwendet.

Zur genauen Erläuterung der Funktionsweise der Standard-Funktionsblöcke Innerer Codierer 13, Innerer Interleaver 14, QAM-Mapper 15, Rahmen(Frame)-Adapter 16, Pilot&TPS-Signalaufbereitung 17, OFDM-Modulator 18 und Schutz(Guard)-Intervall-Einfüger 19 wird auf European Telecommunications Standard Institute ETSI: "Digital Video Broadcasting (DVB); Framing structure, channel coding and modulation for digital terrestrial television", Juli 1999, EN 300 744 V 1.2.1. verwiesen.

DVB-T (Digital Video Broadcasting-Terrestrial) ist ein europaweit standardisiertes Übertragungsverfahren für digitales terrestrisches Fernsehen. Der DVB-T-Standard ist in Anlehnung an die bereits standardisierten Systeme für Kabel- und Satellitenübertragung entwickelt worden. Hinzugefügt wurde im Anschluß an den inneren Codierer 13, dem das zu übertragende, außencodierte, digitale Datensignal A zugeführt wird, der innere Interleaver 14, der die im Funkfeld auftretenden frequenzselektiven Störungen auf viele Datensymbole verteilt. Die Fehlerkorrektur im Empfänger kann somit wirkungsvoller arbeiten.

Die darauf folgenden Komponenten sind speziell für das DVB-T-Übertragungssystem entwickelt worden. Zunächst wird im Rahmen(Frame)-Adapter 16 der OFDM-Rahmen durch Zusammenfassen und Positionieren von Datensymbolen und Pilotsymbolen aus der Pilot&TPS-Signalaufbereitung 17 generiert. Ein OFDM-Rahmen besteht wiederum aus einzelnen OFDM-Symbolen. Bei OFDM (Orthogonal Frequency Division Multiplex) handelt es sich um ein Multiträger-Modulationsverfahren, bei dem der zu übertragende Gesamtdatenstrom auf eine der Anzahl von Subträgern entsprechende Anzahl von Datenströmen aufgeteilt wird.

Diese werden dann zeitlich parallel, spektral auf die Subträger verteilt, übertragen. Diese spezielle Modulation erfolgt im OFDM-Modulator 18. Durch Anhängen eines Schutz(Guard)-Intervalls an jedes Sendesymbol mittels des Schutz(Guard)-Intervall-Einfügers 19 kann eine hohe Unempfindlichkeit gegen Intersymbolinterferenzen erreicht werden, die typischerweise bei Mehrwegeausbreitung terrestrischer Funksignale auftreten.

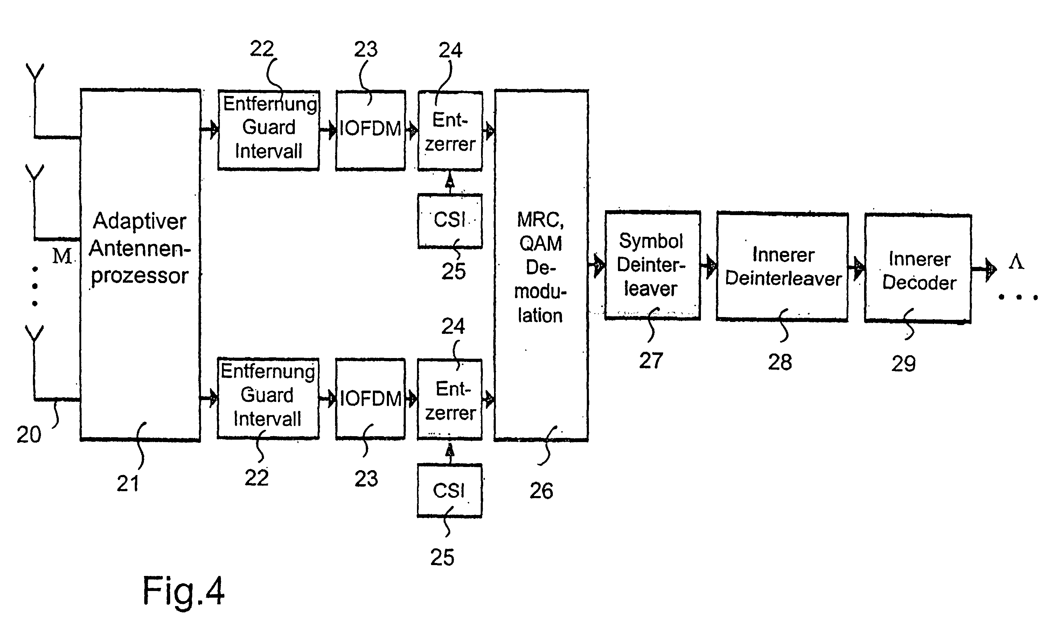

Fig.4 zeigt als Blockschaltbild ein Realisierungsbeispiel eines DVB-T-Empfängers für ein DVB-T-Funksystem. An eine intelligente Antenneneinheit, bestehend aus einem Antennenarray 20 und einem adaptiven Antennenprozessor 21, schließen sich *N* identische, parallele Verarbeitungszweige an, die jeweils einen Schutz(Guard)-Intervall-Entferner 22, einen IOFDM 23, einen Entzerrer 24 und einen CSI(Channel State Information; Kanalzustand)-Geber 25 aufweisen. Dabei ist *N* die Anzahl an Ausbreitungspfaden (oder Antennenkeulen), die am Empfänger verarbeitet werden.

Die digitalen Signalströme M aus den *N* Pfaden werden in einer Einrichtung 26 mit Maximum-Ratio-Combining kombiniert und QAM-demoduliert und anschließend gemäß Fig.4 in einem Symbol-Deinterleaver 27 und einem inneren Deinterleaver 28 entwürfelt und in einem innerem Decodierer 29 decodiert, so dass sich der Datenstrom A ergibt. Für die Simulation wurde perfekte Kenntnis des Kanalzustandes CSI sowie perfekte Adaption der Antennenkeulen auf die Empfangsrichtungen angenommen.

Für eine Simulation wurde ein einfaches 3-Pfad-WSSUS(Wide Sense Stationary Uncorrelated Scattering)-Kanalmodell angenommen. Die Modelleigenschaften sind in der nachfolgenden Tabelle zusammengefaßt. Die mittlere Leistung der Pfade ist auf die Gesamtleistung normiert.

**Tabelle:**

| Kanalmodelleigenschaften | | | | | |
|---|---|---|---|---|---|
| Pfad-# | Pfad-Verzögerung [µs] | mittlere rel. Leistung [dB] | Fading-Charakteristik | max. Doppler [Hz] | Doppler-Spektrum-Form |
| 1 | 0 | 0 | Rayleigh | 50 | Jakes |
| 2 | 5 | 0 | Rayleigh | 50 | Jakes |
| 3 | 15 | 0 | Rayleigh | 50 | Jakes |

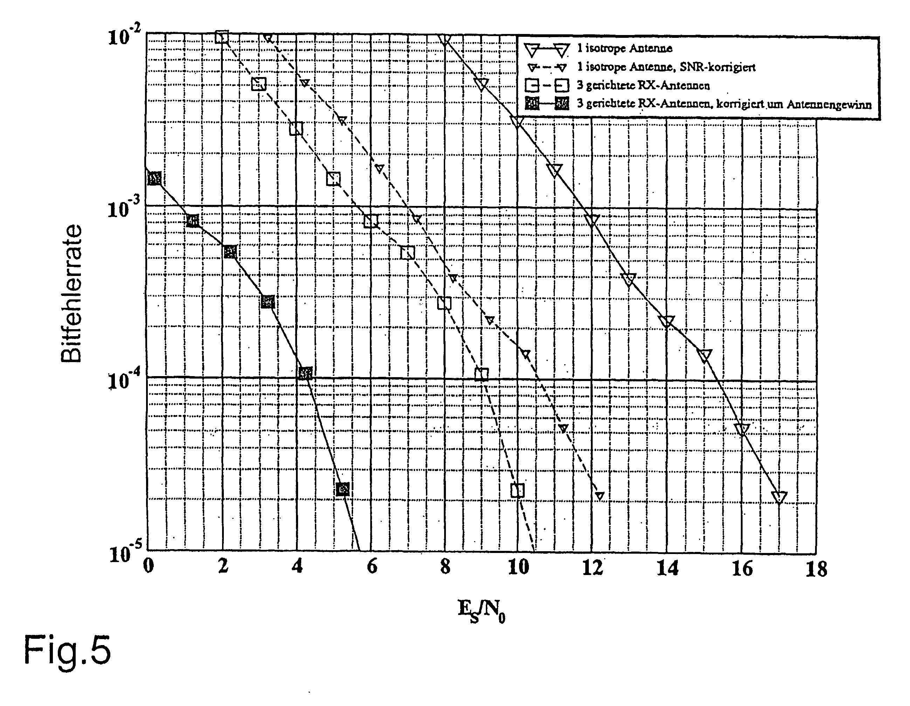

Fig.5 zeigt die Bitfehlerraten der betrachteten Systeme in Abhängigkeit vom Signal/Rausch-Leistungsverhältnis E_{S}/N₀. Als Referenz wurde ein System mit einer isotropen Empfangsantenne simuliert (dreieckige Marker). Um Gewinne sichtbar zu machen, die nicht aus dem Empfang zusätzlicher Leistung resultieren, wurde das Signal/Rausch-Leistungsverhältnis für die Bitfehlerkurve des Systems mit einer Empfangsantenne um den Faktor ¹/₃ korrigiert, da die mittlere empfangene Leistung eines Systems mit einer Empfangsantenne nur ¹/₃ der Leistung eines Systems mit drei Empfangsantennen beträgt (Faktor ¹/₃=-4,77dB).

Wie bereits erwähnt wurde, wird für das System mit drei gerichteten Empfangsantennen eine perfekte Ausrichtung der Antennenkeulen angenommen. Diese Richtcharakteristik wird in der Simulation nur dazu verwendet, um die Ausbreitungsrichtungen bzw. -pfade (räumlich) zu trennen. Dies bedeutet, dass der Antennengewinn, der aus der Gruppencharakteristik der intelligenten Antenne resultiert, hier nicht berücksichtigt ist. Um diesen Gewinn verschiebt sich die Bitfehlerkurve (quadratische Marker) des 3-Antennen-Systems mit gerichteten Antennen nach links.

Um eine Abschätzung des Gewinns einer Gruppenantenne aus drei Einzelantennen zu erhalten, wird folgende Situation betrachtet:
*N* Einzelantennen empfangen dasselbe Signal, das sich nur in seiner Phase unterscheidet. Ein Antennenprozessor versucht nun diese *N* Signale kohärent, d.h. phasenrichtig, aufzuaddieren. Dies ergibt die *N*-fache Signalamplitude und somit die N²-fache Leistung gegenüber einer Einzelantenne. Der Antennenprozessor addiert aber auch das Rauschen der Einzelantennen.

Da die Rauschsignale der Einzelantennen statistisch unabhängig voneinander sind, ergibt sich als Gesamtrauschleistung das *N*-fache der Rauschleistung einer Einzelantenne. Der Gewinn im Signal/Rausch-Verhältnis SNR einer Antennengruppe nach diesen Überlegungen ist also GSNR=10log(*N*²)-10log(*N*)= 10log(*N*). Für einen Antennenprozessor mit drei Einzelantennen gilt: GSNR = 4,77 dB (siehe Fig.5, quadratische Marker, durchgezogene Linie).

Die vorliegende Erfindung ist von großem Interesse für die Informations- und Kommunikationstechnik und kann unter anderem die Übertragungsqualität und Kapazität bestehender Funksysteme wie auch zukünftiger Funksysteme verbessern. Von Bedeutung ist, dass das Verfahren nach der Erfindung so implementiert werden kann, dass es auch in Systemen nach bestehenden Standards eingesetzt werden kann, ohne dass eine Modifikation des jeweiligen Standards erforderlich ist.

### Bezugszeichenliste

- 1: Sender
- 2: Empfänger
- 3: Space-Time-Encoder
- 4: Adaptiver Antennenprozessor
- 5: Antennengruppe
- 6, 7, 8: Raumrichtungen
- 9: Antennengruppe
- 10: Adaptiver Antennenprozessor
- 11: Space-Time-Decodierer
- 12: Sendeantenne
- 13: Innerer Codierer
- 14: Innerer Interleaver
- 15: QAM-Mapper
- 16: Rahmen(Frame)-Adapter
- 17: Pilot&TPS-Signalaufbereitung
- 18: OFDM-Modulator
- 19: Schutz(Guard)-Intervall-Einfüger
- 20: Antennenarray
- 21: Adaptiver Antennenprozessor
- 22: Schutz(Guard)-Intervall-Entferner
- 23: IOFDM
- 24: Entzerrer
- 25: CSI(Channel State Information; Kanalzustand)-Geber
- 26: Einrichtung mit Maximum Ratio Combining
- 27: Symbol-Deinterleaver
- 28: Innerer Deinterleaver
- 29: Innerer Decodierer
- ①, ②, ③: Funkübertragungspfade

## Patentansprüche

1. Verfahren zur Funkübertragung von digitalen Nachrichtensignalen von einem Sender (1) zu einem Empfänger (2) eines zellularen Funksystems unter Verwendung von Codierungsmaßnahmen, bei dem mehrere Sendeantennenkeulen einer oder mehrerer intelligenter Antennengruppen (5) des Senders unter Steuerung mittels eines adaptiven Antennenprozessors (4) bei Ausnutzung der topographischen Kanalgegebenheiten gezielt auf den Empfänger gerichtet werden, wobei als Diversitymaßnahme innerhalb jeder durch eine Sendeantennenkeule gegebenen Ausbreitungsrichtung das zu übertragende Nachrichtensignal pro Ausbreitungsrichtung, d.h. pro Sendeantennenkeule, in jeweils unterschiedlich modifizierter Form ausgestrahlt wird, und bei dem die vom Sender über die verschiedenen Sendeantennenkeulen übertragenen, jeweils modifizierten Signale im Empfänger mit mehreren Empfangsantennenkeulen einer intelligenten Antennengruppe (9) unter Steuerung mittels eines adaptiven Antennenprozessors (10) aufgenommen und daraus die Nachrichtensignale detektiert und decodiert werden, wobei zur Erhöhung der Systemdatenrate Gruppen von Sende- und Empfangsantennenkeulen einander zugeordnet werden und jeweils eine sendeseitige und eine empfangsseitige Gruppe ein Paar bilden, das einen Datenkanal zur Verfügung stellt, so dass mehrere Datenkanäle gleichzeitig im gleichen Frequenzband zwischen zwei Funkgeräten aufgebaut werden, **dadurch gekennzeichnet, dass** eine Beeinflussung auf die Zellplanung des zellularen Funksystems dadurch ermöglicht wird, dass der Empfänger eines mobilen Funkgerätes seine Nachrichtensignale nicht nur von einer Basisstation, sondern von mehreren Sendeantennenkeulen intelligenter Antennengruppen unterschiedlicher Basisstationen erhält, und dass dem Sender des mobilen Funkgerätes mehrere Sendeantennenkeulen einer intelligenten Antennengruppe zur Verfügung stehen, so dass es in umgekehrter Übertragungsrichtung seine Nachrichtensignale nicht nur an eine, sondern an mehrere Basisstationen senden kann, und dass ein Soft-Handover, bei dem das mobile Funkgerät die Basisstation sanft wechselt, dadurch realisiert wird, dass bereits eine Verbindung über eine oder mehrere Sendeantennenkeulen seiner intelligenten Antennengruppe zur neuen Basisstation besteht, bevor die Verbindung über eine oder mehrere andere Sendeantennenkeulen seiner intelligenten Antennengruppe zur alten Basisstation abgebaut wird.

2. Verfahren nach Anspruch 1, **dadurch gekennzeichnet, dass** das Signal/Störleistungs-Verhältnis im Empfänger (2) durch Maximum-Ratio-Combining optimiert wird.

3. Verfahren nach Anspruch 1 oder 2, **dadurch gekennzeichnet, dass** im Sender (1) eine redundanzbildende Kanalcodierung des zu übertragenden Nachrichtensignals vorgenommen wird, die im Empfänger (2) bei der Decodierung wieder rückgängig gemacht wird.

4. Verfahren nach einem der Ansprüche 1 bis 3, **gekennzeichnet durch** den Einsatz von Multi-Carrier-Code-Division-Multiplexing, das keine Ratenverluste aufweist und die Übertragungsqualität **durch** geeignete Ausnutzung von Zeit- und/oder Frequenzdiversity verbessert.

5. Verfahren nach Anspruch 1, **dadurch gekennzeichnet, dass** die auf den einzelnen Sendeantennenkeulen vom Sender (1) ausgehenden Signale zur Modifizierung zeitlich zueinander verzögert ausgesendet werden.

6. Verfahren nach Anspruch 1, **dadurch gekennzeichnet, dass** die auf den einzelnen Antennenkeulen vom Sender (1) ausgehenden Signale zur Modifizierung in der Phase zueinander verschoben ausgesendet werden.

7. Verfahren nach Anspruch 6, **dadurch gekennzeichnet, dass** die Phasenverschiebung der auf den einzelnen Antennenkeulen ausgesendeten Signale zeitlich veränderlich ist.

8. Verfahren nach einem der Ansprüche 5 bis 7, **dadurch gekennzeichnet, dass** die digitalen Nachrichtensignale im Sender (1) mit einem Interleaver (14) verwürfelt und im Empfänger (2) entsprechend in einem Deinterleaver (28) entwürfelt werden.

9. Verfahren nach einem der vorhergehenden Ansprüche, **dadurch gekennzeichnet, dass** bei einer OFDM-Übertragung mit einem Zeit- und/oder Frequenzinterleaving verwürfelt wird.

10. Verfahren nach einem der vorhergehenden Ansprüche, **dadurch gekennzeichnet, dass** bei Systemen mit Mehrträgermodulation, wie z.B. OFDM, die Gesamtzahl der Unterträger in *N* Gruppen aufgeteilt wird, wobei *N* in geeigneter Weise der Anzahl der Sendeantennenkeulen entsprechen sollte, dass jede Gruppe der Unterträger über eine andere Sendeantennenkeule ausgestrahlt wird und dass bei der Zuordnung der Unterträger zu den einzelnen Gruppen die Unterträger so gewählt werden, dass die Unterträger der einzelnen Gruppen verwürfelt sind.

11. Verfahren nach einem der vorhergehenden Ansprüche, **gekennzeichnet durch** ein schnelles Wechseln der Sendeantennenkeulen derart, dass digitale Nachrichtensignale nur auf denjenigen Sendeantennenkeulen ausgesendet werden, auf denen der Übertragungskanal keinem signifikanten Schwund unterworfen ist.

12. Verfahren nach einem der vorhergehenden Ansprüche, **gekennzeichnet durch** eine geeignete Kombination der einzelnen Sendeantennenkeulen mit Space-Time-Codierung, bei welcher Redundanz nicht nur in Zeit- und/oder Frequenzrichtung in den digitalen Nachrichtenstrom eingefügt wird, sondern auch in Raumrichtung, wobei von den isotrop arbeitenden Sendeantennen verschiedene Signale abgestrahlt werden, die sich im Empfänger überlagern.

13. Verfahren nach Anspruch 12, **dadurch gekennzeichnet, dass** bei Verwendung von Space-Time-Coding getrennte Ausbreitungskanäle dadurch realisiert werden, dass Sende- und Empfangsantennen mit mehreren Keulen vorgesehen werden, die paarweise aufeinander adaptiert sind.

14. Verfahren nach einem der vorhergehenden Ansprüche, **dadurch gekennzeichnet, dass** auf Seiten des Empfängers (2) eine oder mehrere Empfangsantennenkeulen auf die Empfangsrichtung/en mit der stärksten Leistung eingestellt wird/werden.

15. Verfahren nach einem der vorhergehenden Ansprüche, **dadurch gekennzeichnet, dass** auf Seiten des Empfängers (2) Funkübertragungspfade ausgeblendet werden.

## Claims

1. A method for wireless transmission of a digital communications signal from a transmitter (1) to a receiver (2) of a cellular wireless system using coding means, in which multiple lobes of one or more smart transmitter antenna arrays (5) are beamed at the receiver as controlled by means of an adaptive antenna processor (4) in utilizing the topographical channel circumstances, wherein as a means of diversity within each propagation direction given by the transmission antenna lobe the communication signal to be transmitted is beamed for each propagation direction, i.e. each transmission antenna lobe in a different modified form, and wherein each of the modified signals transmitted by the transmission via the various transmission antenna lobes is received in the receiver with multiple receiver antenna lobes of a smart antenna array (9) as controlled by means of a adaptive antenna processor (10) in detecting and decoding therefrom the communication signals, arrays of transmission and receiver antenna lobes being assigned to each other to boost the system data rate and one each array at the transmitting end and receiving end forming a pair in making a data channel available so that multiple data channels are composed simultaneously in the same frequency band between two wireless devices, **characterized in that** influencing the cellular planning of the cellular wireless system is possible by the receiver of a mobile wireless device receives its communication signals not only from a base station but from multiple transmission antenna lobes of smart antenna arrays of differing base stations, and that multiple transmission antenna lobes of a smart antenna array are available to the transmitter of the mobile wireless device, so that in the reverse direction of communication it can transmit its communication signals not only to one, but to multiple base stations and that a soft handoff, in which the mobile wireless device changes the base station softly, is achieved by a link via one or more transmission antenna lobes of its smart antenna array already existing to the new base station, before the link via one or more other transmission antenna lobes of its smart antenna array to the former base station is discontinued.

2. The method as set forth in claim 1, **characterized in that** the signal/noise power ratio in the receiver (2) is optimized by maximum ratio combining (MRC).

3. The method as set forth in claim 1 or 2, **characterized in that** in the transmitter (1) redundance-forming channel coding of the communication signal to be transmitted is undertaken which is revoked in the receiver (2) on decoding.

4. The method as set forth in any of the claims 1 to 3, **characterized by** employing multi-carrier code division multiplexing featuring no rates losses and improving communication quality by suitable exploiting time and/or frequency diversity.

5. The method as set forth in claim 1, **characterized in that** the signals sent out on the individual transmission antenna lobes by the transmitter (1) are beamed staggered in time for modification.

6. The method as set forth in claim 1, **characterized in that** the signals sent out on the individual transmission antenna lobes by the transmitter (1) are beamed staggered in phase for modification.

7. The method as set forth in claim 6, **characterized in that** the phase shift of the signals sent out on the individual transmission antenna can be varied in time.

8. The method as set forth in any of the claims 5 to 7, **characterized in that** the digital communication signals are scrambled in the transmitter (1) by an interleaver (14) and correspondingly unscrambled in the receiver (2) in a deinterleaver (28).

9. The method as set forth in any of the preceding claims, **characterized in that** scrambling is done by time and/or frequency interleaving in OFDM communication.

10. The method as set forth in any of the preceding claims, **characterized in that** in systems with multicarrier modulation, such as e.g. OFDM, the total number of sub-carriers is divided into N groups, N suitable corresponding to the number of transmission antenna lobes, that each group of sub-carriers is beamed via a different transmission antenna lobe and that in assigning the sub-carriers to the individual groups, the sub-carriers are selected so that the sub-carriers of the individual groups are scrambled.

11. The method as set forth in any of the preceding claims, **characterized by** fast changeover of the transmission antenna lobes such that digital communication signals are beamed only on the transmission antenna lobes on which the communication channel is not subject to any significant fading.

12. The method as set forth in any of the preceding claims, **characterized by** a suitable combination of the individual transmission antenna lobes with space-time coding, in which redundance is inserted into the digital communication stream not only in the time and/or frequency direction but also in the spatial direction, the isotropic working transmission antennas beaming various signals which are superimposed in the receiver.

13. The method as set forth in any of the preceding claims, **characterized in that** in using space-time coding separate propagation channels are achieved by providing transmission and receiver antennas with multiple lobes adapted paired.

14. The method as set forth in any of the preceding claims, **characterized in that** at the receiving end (2) one or more receiver antenna lobes is/are set to receiver direction(s) having maximum power.

15. The method as set forth in any of the preceding claims, **characterized in that** at the receiving end (2) wireless communication paths are blanked out.

## Revendications

1. Procédé pour la transmission radio de signaux numériques d'informations par un émetteur (1) en direction d'un récepteur (2) d'un système radio cellulaire, moyennant l'utilisation de dispositions de codage, selon lequel plusieurs lobes d'antennes d'émission d'un ou de plusieurs groupes intelligents d'antennes (100) de l'émetteur sont dirigés d'une manière ciblée vers le récepteur moyennant une commande réalisée à l'aide d'un processeur adaptatif d'antenne (4) grâce à l'utilisation des données topographiques de canal, selon lequel en tant que disposition de diversité dans chaque direction de propagation, déterminée par un lobe d'antenne d'émission, le signal d'informations à transmettre est émis pour chaque direction de propagation, c'est-à-dire pour chaque lobe d'antennes d'émission, sous une forme respectivement modifiée différemment, et selon lequel les signaux respectivement modifiés, qui sont transmis par l'émetteur par l'intermédiaire des différents lobes d'antennes d'émission, sont reçus dans le récepteur avec plusieurs lobes d'antennes de réception d'un groupe intelligent d'antennes (9) sous la commande réalisée à l'aide d'un processeur adaptatif d'antenne (10) et les signaux d'information sont détectés et décodés à partir de là, et selon lequel pour accroître le débit de données du système, des groupes de lobes d'antennes d'émission et de réception sont associés entre eux, et respectivement un groupe côté émission et un groupe côté réception forment une paire qui dispose d'un canal de données de sorte que plusieurs canaux de données sont formés simultanément dans la même bande de fréquences entre deux appareils radio, **caractérisé en ce qu'**une influence sur la programmation des cellules du système radio cellulaire devient possible par le fait que le récepteur d'un appareil radio mobile reçoit ses signaux d'information non seulement à partir d'une station de base, mais à partir de plusieurs lobes d'antennes d'émission de groupes intelligents d'antennes de stations de base différentes et que plusieurs lobes d'antennes de réception d'un groupe intelligent d'antennes sont disponibles pour l'émetteur de l'appareil radio mobile, de sorte que dans la direction de transmission inverse, il peut émettre ses signaux d'information non seulement à une station de base, mais à plusieurs stations de base, et qu'un transfert cellulaire progressif, lors duquel l'appareil radio mobile change progressivement de station de base, est réalisé par le fait qu'il existe déjà une liaison passant par un ou plusieurs lobes d'antennes d'émission de son groupe intelligent d'antennes d'émission en direction de la nouvelle station de base avant que la liaison par l'intermédiaire d'un ou de plusieurs lobes d'antennes d'émission de son groupe intelligent d'antennes en direction de l'ancienne station de base soit supprimée.

2. Procédé selon la revendication 1, **caractérisé en ce que** le rapport de puissance signal / bruit dans le récepteur (2) est optimisé par une combinaison de rapport maximum.

3. Procédé selon la revendication 1 ou 2, **caractérisé en ce qu'**un codage de canal, produisant une redondance, du signal d'information à transmettre est réalisé dans l'émetteur (1), ce codage étant à nouveau annulé dans le récepteur (2) lors du décodage.

4. Procédé selon l'une des revendications 1 à 3, **caractérisé par** l'utilisation d'un multiplexage par répartition de codes à porteuses multiples, qui ne présente aucune réduction de débit et améliore la qualité de transmission au moyen d'une utilisation appropriée d'une diversité dans le temps et/ou en fréquences.

5. Procédé selon la revendication 1, **caractérisé en ce que** les signaux émis par l'émetteur (1) dans les différents lobes des antennes d'émission, sont émis, pour modification, en étant retardés dans le temps les uns par rapport aux autres.

6. Procédé selon la revendication 1, **caractérisé en ce que** les signaux émis par les différents lobes d'antennes de l'émetteur (1) sont émis, pour modification, en étant réciproquement déphasés.

7. Procédé selon la revendication 6, **caractérisé en ce que** le déphasage des signaux émis par les différents lobes d'antennes est variable dans le temps.

8. Procédé selon l'une des revendications 5 à 7, **caractérisé en ce que** les signaux numériques d'information sont brouillés dans l'émetteur (1) avec un dispositif d'entrelaçage (14) et sont désembrouillés dans le récepteur (2) de façon correspondante dans un dispositif d'entrelaçage (28).

9. Procédé selon l'une des revendications précédentes, **caractérisé en ce que** dans le cas d'une transmission OFDM, un brouillage est exécuté avec un entrelaçage dans le temps et/ou un entrelaçage de fréquences.

10. Procédé selon l'une des revendications précédentes, **caractérisé en ce que** dans des systèmes ayant une modulation à porteuses multiples, comme par exemple une modulation OFDM, le nombre total des sous-porteuses est réparti en N groupes, N devant correspondre de façon appropriée au nombre des lobes d'antennes d'émission, que chaque groupe des sous-porteuses est émis par l'intermédiaire d'un autre lobe d'antenne d'émission et que, lors de l'association des sous-porteuses aux différents groupes, les sous-porteuses sont choisies de telle sorte que les sous-porteuses des différents groupes sont brouillées.

11. Procédé selon l'une des revendications précédentes, **caractérisé par** une alternance rapide des lobes d'antennes d'émission de telle sorte que les signaux numériques d'information sont émis uniquement dans les lobes des antennes d'émission, dans lesquels le canal de transmission n'est soumis à aucun affaiblissement significatif.

12. Procédé selon l'une des revendications précédentes, **caractérisé par** une combinaison appropriée des différents lobes des antennes d'émission avec un codage espace - temps, pour laquelle une redondance est insérée non seulement dans la direction du temps et/ou dans la direction des fréquences dans le flux numérique d'informations, mais également dans la direction spatiale, auquel cas différents signaux sont émis par les antennes d'émission travaillant de façon isotrope, lesquels se superposent dans le récepteur.

13. Procédé selon la revendication 12, **caractérisé en ce que** dans le cas de l'utilisation d'un codage espace - temps, des canaux de propagation séparés sont réalisés par le fait qu'il est prévu des antennes d'émission et de réception comportant plusieurs lobes, qui sont adaptés les uns aux autres par paires.

14. Procédé selon l'une des revendications précédentes, **caractérisé en ce que** du côté du récepteur (2), un ou plusieurs lobes d'antennes de réception est / sont établis sur la direction de réception / les direction(s) de réception avec la puissance maximale.

15. Procédé selon l'une des revendications précédentes, **caractérisé en ce que** du côté du récepteur (2), des voies de transmission radio sont occultées.
